# EUROPÄISCHE PATENTSCHRIFT

(11) **EP 1 843 033 B1**
(45) Veröffentlichungstag und Bekanntmachung des Hinweises auf die Patenterteilung: **12.05.2010**
(21) Anmeldenummer: 07006510.7
(22) Anmeldetag: 29.03.2007
(51) Int. Cl.: F02M 25/07

(54) **Abgasanlage einer Brennkraftmaschine für ein Kraftfahrzeug mit Abgasrückführung**
Exhaust system of an internal combustion engine for a motor vehicle with exhaust gas recirculation
Système d'échappement d'un moteur à combustion interne pour véhicule automobile doté d'un système de recirculation de gaz d'échappement

(30) Priorität: 03.04.2006 AT 5632006
(43) Veröffentlichungstag der Anmeldung: 10.10.2007
(73) Patentinhaber: MAN Nutzfahrzeuge Österreich AG, 4400 Steyr (AT)
(72) Erfinder: Raab, Gottfried, Dipl.-Ing., 4320 Perg (AT)

(56) Entgegenhaltungen:
- EP-A- 1 258 603
- WO-A-2007/073769
- JP-A- 2005 127 137
- US-A- 4 852 642

## Beschreibung

### Technisches Gebiet

Die Erfindung betrifft Abgasanlage eines Kraftfahrzeugs mit einer Abgassammelleitung, in die Abgase einer Brennkraftmaschine des Kraftfahrzeugs einleitbar sind und mit einer zumindest ein Flatterventil aufweisenden Abgasrückführung, über die Abgas aus der Abgassammelleitung in eine Verbrennungsluftzufuhr der Brennkraftmaschine einleitbar ist, indem durch das Flatterventil in Abhängigkeit von Abgasdruckpulsationen ein Strömungsweg zwischen der Abgassammelleitung und der Verbrennungsluftzufuhr herstellbar ist.

### Stand der Technik

Allgemein sind bei Kraftfahrzeugen Antriebseinheiten bekannt, die über mit einer Abgasrückführung gekoppelte Brennkraftmaschinen verfügen. Bei einer Abgasrückführung wird das aus der Brennkraftmaschine geleitete Abgas über entsprechende Rohrleitungen zumindest teilweise der Verbrennungsluft zugeführt, so dass eine Enthalpieerhöhung der Verbrennungsluft erreicht wird. In der Kraftfahrzeugtechnik sind vor allem Abgasrückführsysteme für aufgeladene Brennkraftmaschinen bekannt, bei denen aus Verschleiß- und Verschmutzungsgründen das Abgas zwischen dem Motor und der Turbine entnommen und durch einen separaten Abgasrückführwärmetauscher geleitet wird. Der abgekühlte Abgasstrom wird nach einem Ladeluftkühler der Verbrennungsluft wieder zugeführt.

So ist etwa aus der DE 199 24 398 A1 eine flüssigkeitsgekühlte Brennkraftmaschine mit einem Abgasrückführsystem bekannt, über das mittels eines so genannten Abgasrückführungsventils (AGR-Ventil) gesteuert Abgas in die Verbrennungsluftzufuhr einleitbar ist. Hierfür ist ein mit dem Kühlmittelkreislauf der Brennkraftmaschine verbundener Wärmetauscher vorgesehen, durch den das Abgas gekühlt werden kann, bevor es in die Verbrennungsluftzufuhr geleitet wird. Bei der in dieser Druckschrift vorgeschlagenen technischen Lösung wird der AGR-Wärmetauscher zur Nutzung von Abgaswärme genutzt, um eine schnellere Erwärmung des Kühlmittelumlaufes in der Warmlaufphase der Brennkraftmaschine zu erreichen. Neben der raschen Erwärmung des Kühlmittels nach einem Kaltstart der Brennkraftmaschine soll durch die Nutzung der im Abgasrückführsystem vorhandenen Wärme während der Warmlaufphase der Brennkraftmaschine ferner eine schnelle Erwärmung von zusätzlichen Systemen, wie etwa einer Fahrzeugheizung und/oder einer Klimaanlage, erreicht werden.

Warmlaufphase der Brennkraftmaschine ferner eine schnelle Erwärmung von zusätzlichen Systemen, wie etwa einer Fahrzeugheizung und/oder einer Klimaanlage, erreicht werden.

Außer einer schnelleren Erwärmung des Motorkühlmittels während der Kaltstartphase wird durch die interne Abgasrückführung eine Senkung der Abgasemissionen, insbesondere der Stickoxidemissionen, ermöglicht. Indem der angesaugten Luft ein Teil der Abgase über eine geeignete Wahl der Ventilsteuerzeiten zugemischt wird, wird der Sauerstoffanteil der Frischluftladung im Zylinder reduziert und auf diese Weise die spezifische Wärmekapazität erhöht. Dies bewirkt eine Senkung der Verbrennungstemperatur und damit eine Reduzierung der Stickoxidemission. Gleichzeitig wird durch die Zuführung eines Teils der Abgase zum Verbrennungsvorgang die insgesamt ausgestoßene Abgasmenge reduziert.

Aus der JP 2005 127137 A ist eine Abgasrückführung bekannt, bei der Abgas am Leitungsende einer Verbrennungsluftzufuhr eingeleitet wird. Das Abgas wird dabei zuvor durch Wärmetauschermittel geleitet. Die bekannte Vorrichtung weist einerseits Nachteile bezüglich der Durchmischung von Abgas und Verbrennungsluft auf und darüber hinaus bei der Fortpflanzung von Abgasdruckpulsationen, insbesondere bei der Durchleitung durch die Wärmetauscher.

Ferner ist aus der US 4 852 642 A eine Wärmetauschervorrichtung mit einem inneren und einem äußeren Rohr bekannt.

Ausgehend von dem bekannten Stand der Technik liegt der Erfindung die Aufgabe zugrunde, eine Abgasanlage mit einer Abgasrückführung derart weiterzubilden, dass die während des Betriebs einer Brennkraftmaschine entstehende Abgasemission mit verhältnismäßig einfachen Mitteln gesenkt werden kann. Insbesondere soll die vorgeschlagene technische Lösung und damit die Reduzierung der Abgasemission zu realisieren sein, ohne dass die bekannte Konzeption der Rückführung von Abgas in die Verbrennungsluftzufuhr geändert werden muss.

Eine Abgasanlage für ein Kraftfahrzeug, mit der die vorstehend genannte Aufgabe gelöst wird, ist im Anspruch 1 angegeben. Vorteilhafte Ausführungsformen der Erfindung sind Gegenstand der Unteransprüche und werden in der Beschreibung unter Bezugnahme auf die Figuren näher erläutert.

Die Erfindung betrifft eine Abgasanlage eines Kraftfahrzeugs mit einer Abgassammelleitung, in die Abgase einer Brennkraftmaschine des Kraftfahrzeugs einleitbar sind und mit einer zumindest ein Regelorgan aufweisenden Abgasrückführung, über die Abgas aus der Abgassammelleitung in eine Verbrennungsluftzufuhr der Brennkraftmaschine einleitbar ist, indem durch das Regelorgan in Abhängigkeit von Abgasdruckpulsationen in der Abgassammelleitung ein Strömungsweg zwischen der Abgassammelleitung und einer zwischen der Brennkraftmaschine und einer Verdichtereinheit befindlichen Einleitungsstelle der Verbrennungsluftzufuhr herstellbar ist, die derart weitergebildet worden ist, dass wenigstens eine Wärmeübertragereinheit vorgesehen ist, mit der Wärmeenergie aus dem in der Abgasrückführung befindlichen Abgas auskoppelbar und in ein Abgasnachbehandlungssystem einkoppelbar ist, und die Wärmeübertragereinheit abgasseitig derart ausgeführt ist, dass sich die Abgasdruckpulsationen von einem Abgaseinlass bis zu einem Abgasauslass der Wärmeübertragungseinheit derart fortpflanzen, dass ein abgasseitig am Regelorgan anstehender Druck zumindest zeitweise höher als ein an der Einleitungsstelle der Verbrennungsluftzufuhr herrschender Druck ist.

Mit der Erfindung wird eine Abgasanlage für ein Kraftfahrzeug bereitgestellt, bei der die aus dem Abgasrückführsystem abzuleitende Wärme in das Abgasnachbehandlungssystem geleitet wird, damit an dieser Stelle eine Abgasnachbehandlung mit hohem Wirkungsgrad sicher gestellt ist. Vorzugsweise verfügt die Abgasnachbehandlung über mindestens einen Katalysator, der mit Hilfe der aus der Abgasrückführung ausgekoppelten Wärme auch nach einem Kaltstart des Fahrzeugs in verhältnismäßig kurzer Zeit auf Betriebstemperatur bringbar ist. Neben der Beheizung eines Systems zur Abgasnachbehandlung bietet die erfindungsgemäß ausgeführte Abgasanlage den Vorteil, dass bei der Abgasrückführung weniger Wärme an die Umgebung abgeführt werden muss und somit auch weniger Energie ungenutzt bleibt. Dies bedeutet einerseits, dass die eigentliche Kühleinheit der Abgasrückführung kleiner als gewöhnlich dimensioniert werden kann und andererseits, dass weniger Wärme über den luftgekühlten Fahrzeugkühler abgeführt werden muss. Dies ist insbesondere bei einem Nutzfahrzeug von Bedeutung, da hier insgesamt im Bereich der Antriebseinheit vergleichsweise viel Wärme abzuführen ist, so dass die bei Kraftfahrzeugen üblicherweise eingesetzten Kühlkonzepte oftmals an ihre Grenzen stoßen.

Bezüglich der zum Einsatz kommenden Abgas;nachbehandlung ist es weiterhin denkbar, einen Partikelabscheider oder andere Komponenten zur Abgasnachbehandlung, insbesondere zur Durchführung chemischer Reaktionen, vorzusehen. In einer speziellen Ausführungsform der Erfindung verfügt die der Brennkraftmaschine nachgeschaltete Abgasnachbehandlung über eine Katalysatoreinheit, die einen Oxidationskatalysator aufweist. Alternativ oder in Ergänzung zu dieser Katalysatoreinheit kann darüber hinaus ein Partikelabscheider, vorzugsweise ein Russpartikelabscheider, ein offenes Filtersystem und/oder ein geschlossenes Filtersystem vorgesehen sein.

Eine weitere ganz spezielle Ausführungsform der Erfindung sieht vor, dass die Wärmeübertragereinheit in Form eines Rohr-in-Rohr-Wärmetauschers ausgebildet ist, der aus einem inneren und einem äußeren Hohlzylinder gebildet wird. In einer derart ausgeführten Wärmeübertragereinheit wird das Abgas in einem Zwischenraum zwischen dem inneren und dem äußeren Hohlzylinder entlang geleitet, während die Abgasnachbehandlungseinheit zumindest teilweise im inneren Hohlzylinder angeordnet ist. Alternativ hierzu ist es denkbar, die Wärmeübertragungseinheit nach Art eines Rohrbündelwärmetauschers auszuführen, der eine Vielzahl von Wärmeübertragerrohren in einem Gehäuse aufweist. Hierbei kann das Abgas entweder innerhalb oder außerhalb der Rohre entlang geleitet werden und die Komponenten der Abgasnachbehandlung entsprechend auf der jeweils gegenüberliegenden Seite der Wärmeübertragungswand angeordnet sein. Wesentlich ist auch in diesem Fall, dass der Druckverlust auf der Abgasseite auf dem Strömungsweg von der Abgassammelleitung bis zur Einleitungsstelle in die Verbrennungsluftzufuhr nur so groß ist, dass zumindest teilweise Abgas aus der Abgassammelleitung über das Regelorgan in die Verbrennungsluftzufuhr einleitbar ist. Bei dem Regelorgan handelt es sich vorzugsweise um wenigstens ein Flatterventil, das den Strömungsweg in die Verbrennungsluftzufuhr immer dann frei gibt, wenn der Druck auf der der Abgasrückführung zugewandten Seite höher als auf der der Verbrennungsluftzufuhr zugewandten Seite ist.

Der Anteil der die Brennkraftmaschine verlassenden Gesamtabgasmenge, der in die Abgasrückführung und somit in die Wärmeübertragereinheit bzw. in die Wärmeübertragereinheit und den Kühler der Abgasrückführung eingeleitet wird, beträgt vorzugsweise bis zu 50%. Ganz besonders geeignet ist ein Betrieb zwischen 20 und 40%.

Im Folgenden wird die Erfindung anhand eines Ausführungsbeispiels ohne Beschränkung des allgemeinen Erfindungsgedankens unter Bezugnahme auf die Figur näher erläutert. Es zeigt:
- Fig. 1:: Schematisierte Darstellung einer Brennkraftmaschine mit geregelter Aufladung;
- Fig. 2:: Schnittdarstellung einer Abgasrückführung mit Wärmeübertragereinheit und Kühler;

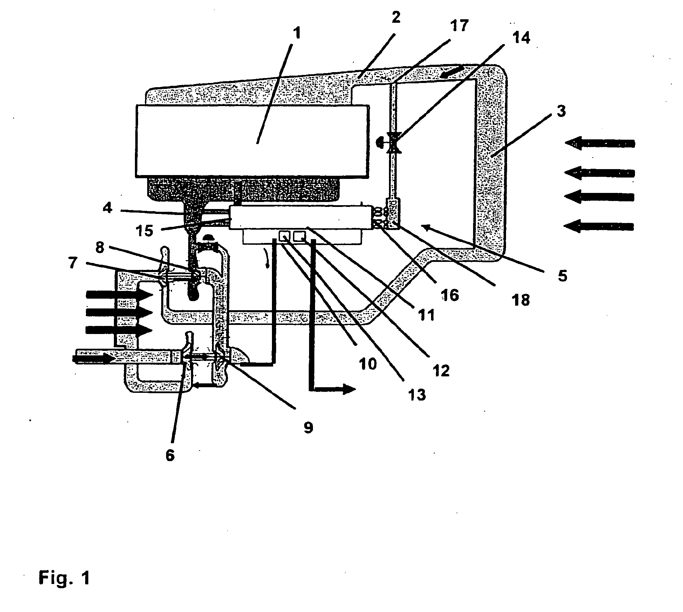

Die Figur 1 zeigt eine schematisierte Darstellung einer Antriebseinheit für ein Kraftfahrzeug mit einer Brennkraftmaschine 1, die über eine Verbrennungsluftzufuhr 2 mit der benötigten Verbrennungsluft versorgt wird. Das während des Betriebs in der Brennkraftmaschine gebildeten Abgas wird über eine Abgasanlage abgeführt.

Bevor die Verbrennungsluft der Brennkraftmaschine zugeführt wird, wird die Luft mit Hilfe eines Ladeluftkühlers 3 abgekühlt. Das bei der Verbrennung des im Verbrennungsraum der Brennkraftmaschine 1 gebildeten Luftkraftstoffgemisches entstehende Abgas wird über eine entsprechende Abgasleitung 4 aus der Brennkraftmaschine abgeführt. Nachdem das Abgas den Verbrennungsraum bereits verlassen hat, wird das aus der Brennkraftmaschine abgeleitete Abgas zumindest teilweise über eine Abgasrückführung 5 wieder in die Verbrennungsluftzufuhr 2 eingeleitet.

Die Versorgung der Brennkraftmaschine 1 mit Verbrennungsluft erfolgt bei der in Figur 1 gezeigten Antriebseinheit eines Kraftfahrzeugs mit Hilfe einer zweistufigen Aufladung. Die zweistufige Aufladung wird in dem vorliegenden Ausführungsbeispiel mit Hilfe eines Niederdruckturboladers 6 sowie mit einem Hochdruckturbolader 7 realisiert. Durch die beiden Turbolader wird die angesaugte Umgebungsluft in zwei Stufen auf den für die Verbrennung erforderlichen Druck komprimiert. Angetrieben werden die beiden Verdichter 6, 7 mittels zweier jeweils im Abgasstrang der Brennkraftmaschine 1 vorgesehenen Abgasturbinen 8, 9. Auf diese Weise wird der Teil des aus der Brennkraftmaschine 1 abgeleiteten Abgases, der nicht in die Abgasrückführung 5 geleitet wird, über die zwei hintereinander geschalteten Turbinen 8, 9 einem Abgasnachbehandlungssystem 10 zugeführt. Das Abgasnachbehandlungssystem weist zumindest einen Oxydationskatalysator sowie einen Partikelabscheider auf.

Die in der Figur 1 dargestellte Abgasanlage verfügt in der Abgasrückführung 5 über eine Wärmeübertragereinheit 11, über die die Abgasrückführung 5 und die Abgasnachbehandlung 10 in thermischem Kontakt stehen. Dem durch die Abgasrückführung 5 strömenden Abgas kann auf diese Weise Wärme entzogen und in das Abgasnachbehandlungssystem 10 eingekoppelt werden. Als wesentliche Komponenten verfügt das Abgasnachbehandlungssystem 10 über einen Oxidationskatalysator 11 sowie einen Partikelabscheider 12. Damit diese Komponenten auch während der Kaltstartphase der Brennkraftmaschine 1 in kurzer Zeit auf die erforderliche Betriebstemperatur gebracht werden, erfolgt die Beheizung des Oxidationskatalysators 12 sowie des Partikelabscheiders 13 mit Hilfe der über die Wärme-überträgereinheit 11 aus der Abgasnachbehandlung ausgekoppelten Wärme.

Der Abgasrückführung 5 ist ein als Flatterventil ausgeführtes Regelorgan 14 nachgeschaltet, das während des Betriebs der Brennkraftmaschine immer dann einen Strömungsweg zwischen der Abgassammelleitung 4 und der Verbrennungsluftzufuhr 2 frei gibt, wenn der Druck auf der Seite der Abgasrückführung 5 höher als der Druck an der Einleitstelle 17 der Verbrennungsluftzufuhr 2 ist. In der Regel öffnet bzw. schließt das Regelorgan somit mit der gleichen Frequenz, die auch die Druckpulsation des Abgases aufweist.

Um das ordnungsgemäße Öffnen bzw. Schließen des Regelorgans 14 während des Betriebs sicher zu stellen, ist die Wärmeübertragereinheit 11 derart ausgeführt, dass sich die in der Abgassammelleitung 4 entstehenden Druckpulsation des Abgases von einem Abgaseinlass 15 bis zu einem Abgaseinlass 16 der Wärmeübertragereinheit fortpflanzt und so am Regelorgan 14 der Druck auf der Seite der Abgasrückführung 5 zumindest zeitweise, und zwar in Abhängigkeit der Druckpulsation des Abgases, höher ist, als auf der Seite der Verbrennungsluftzufuhr 2. Je nach Betriebszustand der Brennkraftmaschine 1 können auf diese Weise bis zu 50% des gesamten Abgases über die Abgasrückführung 5 mit Regelorgan 14 in die Verbrennungsluftzufuhr eingeleitet werden.

Zusätzlich zu der Wärmeübertragereinheit 11 ist in der Abgasrückführung 5 ein Kühler 18 vorgesehen, mit dem Wärme, die trotz Einsatz der Wärmeübertragereinheit 11 aus der Abgasrückführung 5 abgeführt werden muss, damit die Ladeluft in der Verbrennungsluftzufuhr 2 nicht zu sehr aufgeheizt wird, abgeführt wird. Diese über den Kühler 18 der Abgasrückführung 5 abgeführte Abwärme wird an einen Kühlkreislauf des Kraftfahrzeugs übertragen und über den luftgekühlten Hauptkühler (nicht dargestellt) des Fahrzeugs an die Umgebung abgegeben.

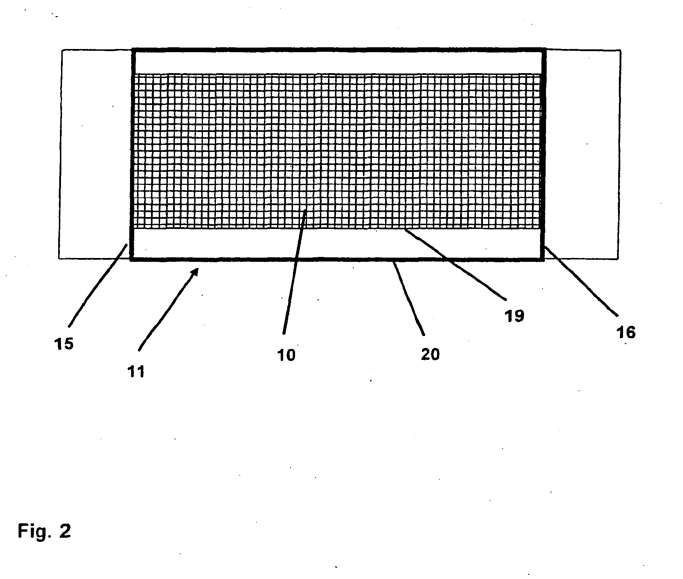

Figur 2 zeigt eine Schnittdarstellung einer Wärmeübertragereinheit 11, mittels der Wärme aus dem in der Abgasrückführung 5 befindlichen Abgas an ein Abgasnachbehandlungssystem 10 übertragen wird. Die Wärmeübertragereinheit 11 ist als Rohr-in-Rohr-Wärmeübertrager ausgeführt, wobei das Abgasnachbehandlungssystem innerhalb des Innenrohrs 19 angeordnet ist. Während des Betriebs strömt das aus der Brennkraftmaschine abgeleitete Abgas zumindest teilweise durch den zwischen dem Außenrohr 20 und dem Innenrohr 19 befindlichen Zwischenraum, wodurch die im Abgas enthaltene Wärme zumindest teilweise an das Abgasnachbehandlungssystem übertragen wird.

### Bezugszeichenliste

- 1: Brennkraftmaschine
- 2: Verbrennungsluftzufuhr
- 3: Ladeluftkühler
- 4: Abgassammelleitung
- 5: Abgasrückführung
- 6: Niederdruckverdichter
- 7: Hochdruckverdichter
- 8: Hochdruckturbine
- 9: Niederdruckturbine
- 10: Abgasnachbehandlung
- 11: Wärmeübertragereinheit
- 12: Oxydationskatalysator
- 13: Partikelabscheider
- 14: Regelorgan
- 15: Abgaseinlass der Wärmeübertragereinheit
- 16: Abgasauslass der Wärmeübertragereinheit
- 17: Einleitstelle in der Verbrennungsluftzufuhr
- 18: Kühler der Abgasrückführung
- 19: Innenrohr
- 20: Außenrohr

## Patentansprüche

1. Abgasanlage eines Kraftfahrzeugs mit einer Abgassammelleitung (4), in die Abgase einer Brennkraftmaschine (1) des Kraftfahrzeugs einleitbar sind und mit einer zumindest ein Regelorgan (14) aufweisenden Abgasrückführung (5), über die Abgas aus der Abgassammelleitung (4) in eine Verbrennungsluftzufuhr (2) der Brennkraftmaschine (1) einleitbar ist, indem durch das Regelorgan (14) in Abhängigkeit von Abgasdruckpulsationen in der Abgassammelleitung (4) ein Strömungsweg zwischen der Abgassammelleitung (4) und einer zwischen der Brennkraftmaschine (1) und einer Verdichtereinheit (6, 7) befindlichen Einleitstelle (17) der Verbrennungsluftzufuhr (2) herstellbar ist, wobei wenigstens eine Wärmeübertragereinheit (11) vorgesehen ist, mit der Wärmeenergie aus dem in der Abgasrückführung (5) befindlichen Abgas auskoppelbar und in ein Abgasnachbehandlungssystem (10) einkoppelbar ist, wobei das Abgasnachbehandlungssystem (10) wenigstens einen Partikelabscheider (13) und/oder wenigstens eine Katalysatoreinheit aufweist **dadurch gekennzeichnet dass** die Wärmeübertragereinheit (11) abgasseitig derart ausgeführt ist, dass sich die Abgasdruckpulsationen von einem Abgaseinlass (15) bis zu einem Abgasauslass (16) der Wärmeübertragungseinheit (11) derart fortpflanzen, dass ein abgasseitig am nachgeschalteten Regelorgan (14) anstehender Druck zumindest zeitweise höher als ein an der Einleitungsstelle der Verbrennungsluftzufuhr (2) herrschender Druck ist, wobei die Wärmeübertragungseinheit (11) einen inneren und einen äußeren Hohlzylinder aufweist, die derart konzentrisch zueinander angeordnet sind, dass ein Bereich zwischen dem inneren und dem äußeren Hohlzylinder zumindest einen Abschnitt des zur Einleitungsstelle führenden Strömungsweges des Abgas bildet, wobei das Abgasnachbehandlungssystem (10) zumindest teilweise im inneren Hohlzylinder angeordnet ist.

2. Abgasanlage nach Anspruch 1, **dadurch gekennzeichnet, dass** das Regelorgan (14) als Flatterventil ausgeführt ist.

3. Abgasanlage nach Anspruch 2, **dadurch gekennzeichnet, dass** die Katalysatoreinheit über zumindest einen Oxydationskatalysator (12) verfügt.

4. Abgasanlage nach einem der Ansprüche 1 bis 3, **dadurch gekennzeichnet dass** das Abgasnachbehandlungssystem (10) wenigstens einen Filter aufweist.

5. Abgasanlage nach einem der Ansprüche 1 bis 4, **dadurch gekennzeichnet, dass** die Abgasrückführung über wenigstens eine Kühleinheit verfügt, mit der Wärme aus der Abgasrückführung auskoppelbar und mittelbar oder unmittelbar an Umgebungsluft übertragbar ist.

## Claims

1. Exhaust system of a motor vehicle with an exhaust manifold (4), into which the exhaust gases of an internal combustion engine (1) of the motor vehicle can be routed, and with an exhaust gas recirculation system (5) featuring at least one control device (14), via which system the exhaust gas from the exhaust manifold (4) can be routed into a combustion air supply system (2) of the internal combustion engine (1) by way of a flow path that can be established by the control device (14) between the exhaust manifold (4) and an inlet point (17) of the combustion air supply system (2) located between the internal combustion engine (1) and a compressor unit (6, 7) depending on exhaust gas pulsations in the exhaust manifold (4), whereby at least one heat exchanger unit (11) is provided that allows the heat energy to be extracted from the exhaust gas in the exhaust gas recirculation system (5) and supplied to an exhaust gas aftertreatment system (10), whereby the exhaust gas aftertreatment system (10) has at least one particulate separator (13) and/or at least one catalytic converter unit, **characterised in that** the heat exchanger unit (11) is realised on the exhaust side such that the exhaust gas pressure pulsations are propagated from an exhaust gas inlet (15) to an exhaust gas outlet (16) of the heat exchanger unit (11) in such a way that a pressure present on the exhaust gas side at the downstream control device (14) is at least at times higher than a pressure present at the inlet point of the combustion air supply system (2), whereby the heat exchanger unit (11) has an inner and an outer hollow cylinder, said cylinders being arranged concentrically with respect to each other such that an area between the inner and outer hollow cylinder forms at least part of the exhaust gas flow path leading to the inlet point, whereby the exhaust gas aftertreatment system (10) is located at least partially in the inner hollow cylinder.

2. Exhaust system in accordance with Claim 1, **characterised in that** the control device (14) is realised as a shutter valve.

3. Exhaust system in accordance with Claim 2, **characterised in that** the catalytic converter unit has at least one oxidation catalytic converter (12).

4. Exhaust system in accordance with one of Claims 1 to 3, **characterised in that** the exhaust gas aftertreatment system (10) has at least one filter.

5. Exhaust system in accordance with one of Claims 1 to 4, **characterised in that** the exhaust gas recirculation system has at least one cooling unit, which allows heat to be extracted from the exhaust gas recirculation system and transferred indirectly or directly to the ambient air.

## Revendications

1. Système d'échappement d'un véhicule à moteur avec une conduite collectrice d'échappement (4) dans laquelle peuvent être introduits les gaz d'échappement d'un moteur à combustion interne (1) du véhicule à moteur et avec une reconduction des gaz d'échappement (5) présentant au moins un organe de régulation (14), par le biais de laquelle les gaz d'échappement peuvent être introduits de la conduite collectrice d'échappement (4) dans une conduite d'amenée d'air de combustion (2) du moteur à combustion interne (1) en établissant une voie d'écoulement entre la conduite collectrice d'échappement (4) et un point d'introduction (17), se trouvant entre le moteur à combustion interne (1) et une unité de compression (6, 7), de la conduite d'amenée d'air de combustion (2) par l'intermédiaire de l'organe de régulation (14) en fonction des pulsations de pression des gaz d'échappement dans la conduite collectrice d'échappement (4), auquel cas est prévue au moins une unité de transmission de la chaleur (11) permettant de prélever l'énergie thermique provenant des gaz d'échappement se trouvant dans la reconduction des gaz d'échappement (5) et de l'envoyer dans un système de posttraitement des gaz d'échappement (10), celui-ci présentant au moins un séparateur de particules (13) et/ou au moins une unité de catalyse, **caractérisé en ce que** l'unité de transmission de la chaleur (11) est conçue côté échappement de telle manière que les pulsations de pression des gaz d'échappement se propagent d'une admission d'échappement (15) à une sortie d'échappement (16) de l'unité de transmission de la chaleur (11) de sorte qu'une pression exercée côté échappement sur l'organe de régulation (14) monté en aval soit plus élevée au moins temporairement qu'une pression régnant au niveau du point d'introduction (17) de la conduite d'amenée d'air de combustion (2), auquel cas l'unité de transmission de la chaleur (11) présente un cylindre creux intérieur et un cylindre creux extérieur disposés concentriquement l'un par rapport à l'autre de telle manière qu'une zone comprise entre le cylindre creux intérieur et le cylindre creux extérieur forme au moins une section de la voie d'écoulement des gaz d'échappement conduisant au point d'introduction, le système de posttraitement des gaz d'échappement (10) étant disposé au moins partiellement dans le cylindre creux intérieur.

2. Système d'échappement selon la revendication 1, **caractérisé en ce que** l'organe de régulation (14) est conçue comme valve flottante.

3. Système d'échappement selon la revendication 2, **caractérisé en ce que** l'unité de catalyse dispose au moins d'un catalyseur à oxydation (12).

4. Système d'échappement selon l'une des revendications 1 à 3, **caractérisé en ce que** le système de posttraitement des gaz d'échappement (10) présente au moins un filtre.

5. Système d'échappement selon l'une des revendications 1 à 4, **caractérisé en ce que** la reconduction des gaz d'échappement dispose au moins d'une unité de refroidissement permettant de prélever la chaleur de la reconduction des gaz d'échappement et de la transporter directement ou indirectement à l'air ambiant.
